# FASCICULE DE BREVET EUROPEEN

(11) **EP 3 656 525 B1**
(45) Date de publication et mention de la délivrance du brevet: **11.10.2023**
(21) Numéro de dépôt: 19210248.1
(22) Date de dépôt: 20.11.2019
(51) Int. Cl.: B29B 17/00, B29B 17/02, B29B 17/04, B09B 3/00, A47C 27/15, B32B 27/40, B32B 25/04, B32B 27/08, B68G 7/02, B09B 3/21, B32B 27/06, B29K 7/00, B29K 75/00, B29K 105/04, B29L 31/00

(54) **PROCEDE DE FABRICATION DE NAPPES DE MOUSSES RECYCLEES**
HERSTELLUNGSVERFAHREN VON RECYCELTEN SCHAUMSTOFFSCHICHTEN
METHOD FOR MANUFACTURING RECYCLED FOAM SHEETS.

(30) Priorité: 21.11.2018 FR 1871674
(43) Date de publication de la demande: 27.05.2020
(73) Titulaire: SUEZ R & R Belgium SA, 1082 Berchem-Sainte Agathe (BE)
(72) Inventeur: ABOU'OU, Angèle, 4420 MONTEGNÉE (BE)
(74) Mandataire: Santarelli

(56) Documents cités:
- CN-A- 102 160 724
- US-A1- 2013 206 878
- US-A1- 2015 296 995

## Description

La présente invention a trait aux produits d'ameublement tels que des matelas, et plus particulièrement à un procédé de fabrication de nappes de mousses à partir de mousses de matelas recyclées, et des produits d'ameublement comprenant lesdites nappes.

De manière générale aujourd'hui, en fin de vie, les matelas sont incinérés. Quelques initiatives existent pour proposer des alternatives à cet état de chose :
- Démantèlement des matelas avec récupération du métal et incinération des matériaux restant ;
- Démantèlement des matelas avec récupération du métal et valorisation des mousses en sous-couches de tapis, ou en tapis de vache, ou en panneaux d'isolation phonique et/ou thermique.

Le faible coût des mousses polyuréthane et latex vierges n'en favorise pas le recyclage, surtout dans les pays où aucune incitation au recyclage (notamment réglementaire et/ou fiscale) n'est mise en place.

La problématique des produits chimiques réglementés est aussi rédhibitoire pour ce secteur d'activité. En effet, le nombre de produits chimiques à trier est très élevé et va continuer d'évoluer.

Ceci mène à une situation où la mousse recyclée a un prix supérieur à la mousse vierge. Ainsi, il existe peu d'initiatives tendant à fabriquer des nappes de mousse recyclée provenant de vieux matelas, pour réintégrer ces mousses de façon circulaire dans des nouveaux matelas et autres produits haut de gamme.

On peut néanmoins citer la demande de brevet WO2012/022888, qui propose un procédé de recyclage de produits d'ameublement, notamment de matelas, de sommiers et de sièges, ledit procédé conduisant à des nappes de matériau. Il comprend les étapes suivantes :
- une étape de démembrement, dans laquelle des matériaux de base sont obtenus par démembrement de l'élément de literie ;
- une étape de tri, dans laquelle les matériaux de base sont séparés en plusieurs familles de matériaux, selon la nature des matériaux de bases ;
- une étape de broyage des différentes familles de matériaux ;
- une étape de mélange, dans laquelle un mélange est préparé, le mélange comprenant une quantité prédéterminée d'au moins une famille de matériaux broyés ;
- une étape de formation d'une nappe de matériau non tissé non consolidée à partir du mélange ;
- une étape de consolidation de la nappe de matériau non tissé non consolidée ; et
- une étape de calandrage de la nappe de matériau non tissé, consolidée.

Toutefois, un tel procédé n'est pas totalement satisfaisant. En effet, un tel procédé mène nécessairement à des nappes mixtes, c'est-à-dire comprenant plusieurs types matériaux de nature différente. Le procédé n'indique pas comment obtenir des nappes « monomatériau », qui présentent la résistance et le confort suffisant pour une utilisation comme garniture de meuble ou constituant de matelas.

En outre, ce procédé conduit à des nappes qui sont difficilement recyclables, du fait qu'elles ne sont pas « monomatériau ».

On peut également citer le procédé décrit dans la demande CN102160724, qui permet d'obtenir des coussins de latex obtenus à partir de particules de latex recyclé. Cependant, le latex utilisé dans ce document est essentiellement issu de chutes de production de latex, donc de même qualité qu'un matériau vierge. Ce document n'envisage pas la problématique du recyclage du latex pouvant contenir des contaminant réglementés.

Enfin, la législation européenne pour les produits chimiques est en constante évolution. Des produits chimiques autorisés aujourd'hui dans la composition des mousses de matelas peuvent être interdits ensuite. Les matelas et garnitures de meubles usagés peuvent donc contenir des produits chimiques désormais réglementés. Pour être en conformité avec la règlementation en vigueur, un procédé de recyclage des mousses usagées pour la fabrication de nouveau matelas doit être en mesure de trier efficacement les mousses, pour ne pas réintroduire sur le marché des matières interdites.

La demande de brevet WO2012/022883, qui concerne un procédé d'assainissement de matériaux issus du recyclage de meubles, notamment de matelas, de sommiers et de sièges, propose un procédé permettant de limiter la teneur des matelas obtenus en certains contaminants volatiles. En particulier, ce procédé comprend les étapes suivantes:
- une étape consistant à fournir des matériaux recyclés résultant du recyclage de meubles, ces matériaux contenant une quantité initiale d'au moins un composé chimique de la liste suivante : COV (composés organiques volatils), formaldéhyde, diméthylformamide, chlorophénol;
- une étape de broyage des matériaux recyclés ;
- une étape de traitement thermique au cours de laquelle les matériaux recyclés broyés sont portés à une température supérieure à 150 °C, les matériaux recyclés broyés ayant, après l'étape de traitement thermique, une quantité finale dudit composé chimique inférieure à la quantité initiale

Cependant, cette demande n'indique pas comment produire des matelas qui ne seraient pas contaminés par des substances non volatiles, ne pouvant être éliminées par simple traitement thermique.

Par ailleurs, le procédé décrit dans WO 2012/022883 vise également à la production des nappes mixtes, c'est-à-dire comprenant plusieurs types matériaux de nature différente.

Dans cette méthode, la consolidation des matériaux est effectuée uniquement par le traitement thermique qui cause la fusion des fibres bi-composants.

Ce procédé conduit à des nappes qui sont difficilement recyclables, du fait qu'elles ne sont pas « monomatériau ».

Il existe donc un besoin pour un procédé permettant d'obtenir des matelas et garnitures de meuble à base de matelas recyclés, qui soient eux-mêmes recyclables et qui présentent un confort similaire à un matelas obtenu à partir de matériaux vierges. Le procédé devrait également permettre de respecter des normes sur les produits chimiques en constante évolution.

### Résumé de l'invention

La présente invention vise à pallier les problèmes de l'art antérieur en proposant un procédé de fabrication de matelas et garniture de meuble à partir de matelas recyclés, l'âme dudit matelas ou garniture de meuble étant constituée de nappes « monomatériau ».

Au sens de la présente invention, une nappe « monomatériau » s'entend d'une nappe essentiellement constitué de flocons d'un unique matériau, lesdits flocons étant liés à l'aide d'un liant. Le liant répond avantageusement aux critères des réglementations en vigueur en matière de garnitures d'ameublement, et/ou de matelas. Les nappes monométariau peuvent également contenir des additifs, répondant aussi avantageusement aux critères des réglementations en vigueur en matière de garnitures d'ameublement, et/ou de matelas. Mais contrairement aux nappes de WO2012/022888, les nappes monométariau de l'invention ne comprennent pas d'autre matériau, en particulier elles ne comprennent pas un mélange de mousse polyuréthanne et de latex.

En effet, dans le procédé de l'invention, les nappes sont constituées d'un unique matériau se présentant sous forme de flocons, dont la cohésion est assurée par un liant, si possible de même nature que le matériau fragmentaire. Un tel procédé permet de fabriquer des matelas et garnitures de meuble facilement recyclables, et dont la qualité et le confort sont faciles à contrôler : les performances techniques des matelas produits par le procédé de l'invention sont stables et connues d'avance.

Ainsi, un objet de l'invention vise un procédé de fabrication d'une nappe de polyuréthane à partir de matelas recyclés selon la revendication 1.

Un autre objet de l'invention vise un procédé de fabrication d'une nappe de latex à partir de matelas recyclés selon la revendication 5.

Un autre objet de l'invention vise un procédé de fabrication de matelas à partir de matelas recyclés selon la revendication 15.

Les revendications dépendantes se réfèrent à des modes de réalisation préférés de l'invention.

Un procédé de fabrication de garnitures de meuble à partir de matelas recyclés est aussi divulgué.

### Exposé détaillé

### 1. Procédé de fabrication d'une nappe de polyuréthane

En premier lieu, l'invention concerne un procédé de fabrication d'une nappe de polyuréthane à partir de matelas recyclés selon la revendication 1.

La nappe de polyuréthane ainsi obtenue est une nappe monomatériau, c'est-à-dire qu'elle est constituée de flocons de mousse de polyuréthane et de liant (de préférence un liant polyuréthane), et éventuellement d'additifs, lesdits flocons étant avantageusement constitués à au moins 98% en poids par rapport au poids total desdits flocons d'une mousse de polyuréthanne. En particulier, la nappe de l'invention est dépourvue de latex et/ou de fibres textiles, contrairement aux nappes divulguées dans la demande WO2012/022888.

Au sens de la présente invention, on entend par « polyuréthane » un polymère dans lequel les unités monomères sont combinées par des groupes uréthanne de formule générale -NH-CO-O- ou -O-CO-NH-. Un polyuréthane est généralement obtenu par polymérisation par étapes de deux oligomères fonctionnels : un polyol (i.e. un composé comprenant au moins 2 groupements alcool primaire -OH) et un polyisocyanate, composé comprenant au moins 2 groupements isocyanates -NCO). La mousse de polyuréthane est obtenue lorsque la synthèse du polyuréthane se déroule simultanément à la libération d'un gaz d'expansion dans le polyuréthane, par voie physique ou par voie chimique, ce qui conduit à la création d'une structure alvéolaire.

Les additifs employés sont tous en conformité avec la réglementation européenne, notamment la réglementation REACH (règlement n°1907/2006/CE). Néanmoins, selon un mode de réalisation préféré, la nappe de polyuréthane ne comprend pas d'additifs, et notamment pas d'additifs anti-feu, contrairement aux nappes décrites dans WO2012/022888.

La nappe de polyuréthane nanomatériau de l'invention peut également être qualifiée de nappe d'agglomérés, dont les flocons la constituant sont tous de nature identique (*i.e.* mousse de polyuréthane).

### Etape a)

Lors de l'étape a) de démantèlement, les matériaux de base des matelas usagés sont séparés sous forme de différentes fractions : le métal, les feutres, les autres matières textiles, les mousses polyuréthane et les mousses de latex.

On récupère les mousses de polyuréthane, et cette fraction n'est pas mélangée aux autres fractions.

### Etape b)

Les mousses polyuréthane de l'étape a) sont soumises à une analyse afin d'écarter les mousses polyuréthanes contaminées par des produits organiques réglementés et d'obtenir les mousses de polyuréthane non contaminées.

On entend par « mousses de polyuréthane non contaminées » les mousses de polyuréthane, à la fois :
- ayant au maximum 2% de mousse non polyuréthane (par exemple des mousses latex) en poids par rapport au poids total des mousses, en d'autres termes, une « mousse de polyuréthane non contaminée » comprenant au moins 98% en poids de mousse de polyuréthanne par rapport au poids total des mousses ; et
- présentant une teneur en substances toxiques pour l'homme, en particulier réglementée, inférieure à une valeur prédéterminée, de préférence inférieure ou égale à 0,1% et/ou à la limite de concentration spécifique établie dans le Règlement CLP (CE) N° 1272/2008, et ses amendements. Lesdites substances toxiques pour l'homme comprennent notamment des substances non volatiles.

Les substances toxiques pour l'homme comprennent ou consistent en des substances SVHC (substance of very high concern) telles que définies dans le Règlement CLP (CE) N° 1272/2008, Les substances toxiques pour l'homme, et notamment les substances SHVC, comprennent en particulier les composés halogénés (et plus particulièrement les composés bromés et/ou fluorés), et les composés comprenant des métaux lourds (tels que étain, antimoine, arsenic, chrome, cobalt, cuivre, mercure, nickel, plomb, sélénium). On peut également citer les substances organiques cancérigènes ou les perturbateurs endocriniens, tels que les phthalates.

Au sens de la présente invention, on entend par « composé halogéné » une substance chimique comprenant un atome d'halogène, et notamment un composé organique comprenant au moins une liaison C-Hal (carbone-halogène).

Au sens de la présente invention, on entend par « composés comprenant des métaux lourds » des complexes de métaux lourds, des sels de métaux lourds, des métaux lourds sous forme métallique (degré d'oxydation 0), et /ou des composés comprenant une liaison carbone-métal, tel que par exemple le dibutylétain.

Cette étape est essentielle pour garantir l'innocuité des nappes de polyuréthane produites, et éviter la réintroduction de produits maintenant interdits sur le marché. On recherche en particulier à écarter les mousses polyuréthane comprenant des métaux lourds et des produits bromés, en particulier les retardateurs de flamme bromés.

En pratique, les mousses polyuréthane issues de l'étape a) sont analysées pour détecter les produits chimiques réglementés, et la mousse est écartée lorsque la quantité mesurée des métaux lourds est supérieure à un seuil prédéterminé, typiquement en accord avec la réglementation en vigueur, telle que celui établi dans le Règlement CLP N° 1272/2008/CE du 16/12/2008. De préférence, le seuil prédéterminé est inférieur, par exemple d'au moins 20%, de préférence d'au moins 50%, au seuil en vigueur.

Les mesures peuvent être effectuées par différentes techniques. On peut par exemple utiliser la spectrophotométrie à fluorescence X, spectrométrie par absorption atomique, les techniques analytiques par plasma induit (ICP), notamment spectrométrie sur plasma induit par laser (LIBS).

De préférence, on aura recours à la spectrophotométrie à fluorescence X, du fait de sa précision (notamment par comparaison avec la technique LIBS), de sa facilité de mise en oeuvre, des durées d'analyse et de son coût de mise en oeuvre.

De préférence, la mesure est effectuée par spectrophotométrie à fluorescence X (mesure XRF).

Lors de l'étape b) de sélection, on choisit de préférence des mousses non souillées. On préfère également sélectionner des mousses non humides. Ces deux sélections sont optionnelles, et indépendantes l'une de l'autre. Elles peuvent par exemple être mises en oeuvre par simple sélection visuelle.

### Hygiénisation

L'idée de dormir sur un matelas contenant des matières recyclées peut être rédhibitoire.

Ainsi, selon un mode de réalisation préféré, on effectue entre les étapes b) et c), une étape b2) d'hygiénistation, qui a pour but de garantir l'hygiène et l'innocuité des mousses triées. Selon un autre mode de réalisation, une étape c2) d'hygiénisation est mise en oeuvre entre les étapes c) et d).

L'hygiénisation est typiquement effectuée par fumigation, notamment par mise en contact des mousses polyuréthane avec un gaz fumigène, de préférence le fluorure de sulfuryl SO₂F₂. La durée de mise en contact est suffisante pour effectuer l'hygiénisation, en particulier pour désinsectiser (notamment pour éliminer d'éventuelles puces de lit) les mousses. Dans le cas du fluorure de sulfuryl, la durée de mise en contact est typiquement de 4h.

De préférence, l'hygiénisation comprend une étape d'aération suivant l'étape de fumigation, avant la mise en oeuvre de l'étape suivante.

L'hygiénisation peut également être mise en oeuvre par mise en contact avec un désinfectant. Elle peut également être mise en oeuvre par ondes électromagnétiques, tel que décrit dans la demande WO 2012/022888 (page 6).

### Etape c)

L'étape de broyage est mise en oeuvre selon des techniques habituelles connues de l'homme du métier. On pourra par exemple utiliser un broyeur à couteaux.

Une granulométrie inférieure ou égale à 20 mm permet de garantir les performances mécaniques de la nappe, et permet notamment d'éviter que la nappe ne se déchire trop facilement.

La distribution granulométrique des flocons peut être vérifiée au moyen de différentes techniques dont le tamisage par voie sèche. À cet effet, une colonne de tamisage comportant des tamis de différentes coupures et pourvue d'un entrainement électrique à excentrique déplace la colonne verticalement selon un régime vibratoire contrôlé. En fonction des coupures des tamis utilisés, et du poids de la matière retenue dans chaque tamis, on détermine la distribution granulométrique des flocons de mousse.

La granulométrie des flocons est de préférence comprise entre 5 mm et 20 mm, par exemple entre 6 mm et 15 mm. Elle est typiquement inférieure ou égale à 10 mm, par exemple d'environ 8 mm.

### Etape d)

Le liant utilisé à l'étape d) est avantageusement un isocyanate, notamment choisi parmi le diisocyanate de diphénylméthylène (MDI) ou le diisocyanate de toluène (TDI ou tolylène-2,4-diisocyanate), de préférence le MDI.

Le mélange de liant et de flocons comprend de 5% à 20%, de préférence de 6% à 15%, notamment de 6% à 12% en masse de liant par rapport au poids total du mélange.

Le mélange ainsi obtenu est typiquement versé dans un moule puis subit une compression. Dans le cas du MDI, le mélange et la compression ont lieu de préférence à température ambiante (typiquement, aucun chauffage n'est appliqué).

Dans le cas où le liant est le TDI, on ajoute de préférence de la vapeur d'eau, typiquement sous pression, et typiquement à une température T comprise entre 100°C et 150°C, par exemple entre 110°C et 125°C. L'ajout de vapeur d'e au permet un apport de chaleur qui va catalyser la réaction du liant TDI avec les flocons.

Le mélange est maintenu sous pression et à la température T pendant une durée comprise entre 2h et 10h, de préférence entre 3 et 5 heures.

Puis le gâteau ainsi obtenu est démoulé, et avantageusement découpé pour obtenir des nappes d'épaisseur et de longueur souhaitées.

L'épaisseur des nappes est typiquement comprise entre 5 et 20 cm, notamment de 8 à 18 cm. Par exemple, les nappes peuvent présenter une épaisseur de 8 à 10 cm, ou 15 cm.

Des nappes de largeur « standard » : 70 cm, 80 cm, 90 cm, 120 cm, 140 cm, 160 cm, 180 cm sont réalisables. Les nappes sont généralement de longueur « standard » : 190 cm, 200 cm ou 210 cm. Ainsi, typiquement, les dimensions de la nappe après découpage sont : 80 cm × 200 cm × 15 cm, 90 cm × 200 cm × 15 cm, 140 cm × 200 cm × 15 cm, 160 cm × 200 cm × 15 cm.

La densité des nappes est fonction de la quantité de flocons de mousse introduite dans le moule et de la pression exercée sur le mélange mousse/liant. On considère dans le domaine de la literie que la densité d'un matelas de mousse vierge confortable est d'au moins 30 kg/m³. Il est aussi admis que l'on obtient les mêmes propriétés mécaniques qu'une mousse vierge avec de l'aggloméré de densité double. Ainsi, la densité des nappes de polyuréthane de l'invention est de préférence comprise entre 60 et 130 kg/m³.

Lorsque les nappes sont utilisées pour fabriquer des matelas, la densité sera de préférence entre 60 kg/m3 et 80 kg/m³, notamment entre 68 et 75 kg/m³. Pour une utilisation pour fabriquer des garnitures d'ameublement, la densité sera de préférence entre 70 kg/m³ et 120 kg/m³, notamment entre 110 et 125 kg/m³.

Toutes les combinaisons de modes de réalisation préférés et particuliers du procédé sont envisagées dans l'invention.

### 2. Procédé de fabrication d'une nappe de latex

En premier lieu, l'invention concerne un procédé de fabrication d'une nappe de latex à partir de matelas recyclés selon la revendication 5.

La nappe de latex ainsi obtenue est une nappe monomatériau, c'est-à-dire qu'elle est constituée de flocons de mousse de latex et de liant (de préférence un liant polyuréthane), et éventuellement d'additifs, lesdits flocons étant avantageusement constitués à au moins 98% en poids par rapport au poids total desdites flocons d'une mousse de latex. En particulier, la nappe de latex l'invention est dépourvue de polyuréthane et/ou de fibres textiles, contrairement aux nappes divulguées dans la demande WO2012/022888.

Au sens de la présente invention, on entend par « latex », le latex naturel (typiquement issu de l'Hévéa) et/ou les latex synthétiques et/ou les latex hybrides.

Les additifs employés sont tous en conformité avec la réglementation européenne, notamment la réglementation REACH. Néanmoins, selon un mode de réalisation préféré, la nappe de latex ne comprend pas d'additifs, et notamment pas d'additifs bromés tels que des additifs anti-feu, contrairement aux nappes décrites dans WO2012/022888.

La nappe de latex nanomatériau de l'invention peut également être qualifiée de nappe d'agglomérés, dont les flocons la constituant sont tous de nature identique (i.e. mousse de latex).

### Étape a)

L'étape a) de démantèlement peut être mise en oeuvre de manière similaire à l'étape a) du procédé de fabrication de nappes de polyuréthane décrite plus haut.

### Étape b)

L'étape b) de sélection démantèlement peut être mise en oeuvre de manière similaire à l'étape a) du procédé de fabrication de nappes de polyuréthane décrite plus haut.

On entend par « mousses de latex non contaminées » les mousses de latex, à la fois :
- ayant au maximum 2% de mousse non latex (par exemple des mousses polyuréthanne) en poids par rapport au poids total des mousses, en d'autres termes, une « mousse de latex non contaminée » comprenant au moins 98% en poids de mousse de latex par rapport au poids total des mousses ; et
- présentant une teneur en substances toxiques pour l'homme, en particulier réglementée inférieure à une valeur prédéterminée, de préférence inférieure ou égale à 0,1 % et/ou à la limite de concentration spécifique établie dans le Règlement CLP (CE) N° 1272/2008, et ses amendements. Lesdites substances toxiques pour l'homme comprennent notamment des substances non volatiles. Les substances toxiques pour l'homme comprennent ou consistent en des substances SVHC (substance of very high concern) telles que définies dans le Règlement CLP (CE) N° 1272/200 8,

Les substances toxiques pour l'homme, et notamment les substances SHVC, comprennent en particulier les halogènes (et plus particulièrement le brome et le fluor), les métaux lourds (tels que étain, antimoine, arsenic, chrome, cobalt, cuivre, mercure, nickel, plomb, sélénium). On peut également citer les substances organiques cancérigènes ou les perturbateurs endocriniens, tels que les phthalates.

### Hygiénisation

Selon un mode de réalisation préféré, on effectue entre le étapes b) et c), une étape b2) d'hygiénistation, qui a pour but de garantir l'hygiène et l'innocuité du latex trié triées. Selon un autre mode de réalisation, une étape c2) d'hygiénisation est mise en oeuvre entre les étapes c) et d).

Cette étape d'hygiénisation peut être mise en oeuvre de manière similaire à l'étape d'hygiénisation des mousses de polyuréthane décrite plus haut. De préférence, les mousses subissent une étape subséquente d'aération, avant la mise en oeuvre de l'étape suivante.

### Étape c)

L'étape c) de broyage est mise en oeuvre selon des techniques habituelles connues de l'homme du métier.

Une granulométrie inférieure ou égale à 35 mm permet de garantir les performances mécaniques de la nappe de mousse de latex, et permet notamment d'éviter que la nappe ne se déchire trop facilement.

La granulométrie des flocons est de préférence comprise entre 20 mm et 30 mm, par exemple entre 22 mm et 28 mm.

### Étape d)

Le liant utilisé à l'étape d) est de préférence un isocyanate, notamment choisi parmi le diisocyanate de diphénylméthylène (MDI) ou le diisocyanate de toluène (TDI ou tolylène-2,4-diisocyanate), de préférence le MDI.

Le mélange de liant et de flocons comprend de 5% à 20%, de préférence de 6% à 15%, notamment de 6% à 12% en masse de liant par rapport au poids total du mélange.

L'étape d) du procédé de fabrication des nappes de latex peut être mise en oeuvre de manière similaire à l'étape d) du procédé de fabrication des nappes de polyuréthane.

La densité des nappes de latex ainsi obtenues est de préférence comprise entre 100 et 150 kg/m³, de préférence entre 110 et 125 kg/m³.

L'épaisseur des nappes est de typiquement comprise entre 3 et 10 cm, par exemple entre 3 et 6 cm. Selon un premier mode de réalisation, les nappes présentent une épaisseur comprise entre 4 et 6 cm. Selon un deuxième mode de réalisation, les nappes présentent une épaisseur comprise entre 3 et 5 cm.

Des nappes de largeur « standard » : 70 cm, 80 cm, 90 cm, 120 cm, 140 cm, 160 cm, 180 cm sont réalisables. Les nappes sont généralement de longueur « standard » : 190 cm, 200 cm ou 210 cm.

Toutes les combinaisons de modes de réalisation préférés et particuliers du procédé sont envisagées dans l'invention.

### 3. Procédé de fabrication de matelas

L'invention concerne également un procédé de fabrication d'un matelas selon la revendication 15, comprenant l'assemblage d'une nappe de polyuréthane fabriquée selon le procédé de l'invention, d'une nappe de latex fabriquée selon le procédé de l'invention, et d'une couche d'accueil, avantageusement dans cet ordre.

La couche d'accueil est constituée d'une nappe de polyuréthane avantageusement à mémoire de forme de préférence vierge, et de préférence certifiée conforme à la règlementation en vigueur. Elle possède de préférence une densité comprise entre 40 et 60 kg/m³, notamment entre 48 et 52 kg/m³. Elle présente également avantageusement une épaisseur de 3 à 10 cm, par exemple de 4 à 7 cm.

L'assemblage est typiquement effectué par collage des nappes entre elles. Les colles utilisées pour l'assemblage du matelas sont de préférence certifiées conformes à la règlementation REACH. On peut utiliser des colles usuelles pour la fabrication de matelas. De préférence, elles sont dépourvues de solvants. Par exemple, on emploiera une colle thermofusible à base de polyuréthane.

La colle est de préférence déposée sur une bande de 10 à 20 cm sur le bord de l'une des surfaces à coller, ce qui est suffisant pour la bonne tenue des trois couches du matelas.

La nappe de polyuréthane est collée à la nappe de latex, puis la couche d'accueil en mousse de mémoire de forme est collée à la couche de latex.

Le matelas tri-couche est typiquement habillé d'un coutil, en particulier en tencel.

Le procédé selon l'invention peut également comprendre une étape optionnelle de contrôle qualité du matelas. Cette étape consiste à effectuer une mesure des produits organiques non détectables lors de l'étape b) de sélection des mousses de polyuréthane et/ou de latex. Pour le contrôle qualité de matelas, un échantillon d'aggloméré de latex et un échantillon d'aggloméré de polyuréthane sont typiquement prélevés d'un batch de matelas.

Ces échantillons sont analysés pour détecter toutes les substances organiques susceptibles d'être présentes dans des mousses de matelas usagées et qui sont reprises dans l'Annexe XVII du règlement REACH N°1907/2006/CE du 18/12/200 6, ou dans la réglementation POP N°850/2004/CE du 29/04/2004/CE ou dans le Règlemen t CLP N° 1272/2008 du 16/12/2008. Le batch de matelas est écarté lorsque la quantité mesurée des produits chimiques réglementés, par exemple des métaux lourds, est supérieure à un seuil prédéterminé, typiquement en accord avec la réglementation en vigueur, telle que celui établi dans le Règlement CLP N° 1272/2008/CE du 16/12/2008. De préférence, le seuil prédéterminé est inférieur, par exemple d'au moins 20%, de préférence d'au moins 50%, au seuil en vigueur.

### 4. Procédé de fabrication d'une garniture pour meuble

Les nappes de polyuréthane ou de latex fabriquées selon les procédés de l'invention sont également utiles en tant que garniture d'ameublement, ou pour fabriquer des garnitures d'ameublement. Il s'agit typiquement d'assises.

Selon un mode de réalisation, ladite garniture comprend ou est constituée de nappes de latex. Selon un autre mode de réalisation, ladite garniture comprend ou est constituée de nappes de polyuréthane.

En particulier, selon un mode de réalisation, ladite garniture pour meuble ne comporte pas de matériau laminé.

Selon un mode de réalisation particulier, la nappe est une nappe de polyuréthane de densité comprise entre 70 kg/m³ et 120 kg/m³.

La nappe de polyuréthane ou de latex utilisée pour la préparation de garniture d'ameublement présente avantageusement une densité comprise entre 110 et 125 kg/m³.

### FIGURES

[Fig. 1] représente un exemple de réalisation du procédé de fabrication de matelas de l'invention.
[Fig. 2] représente la structure d'un matelas fabriqué dans l'exemple 4.
[Fig. 3] représente une photographie d'une nappe de polyuréthane fabriquée selon le procédé de l'invention avec des flocons de granulométrie 8 mm. Quelques flocons sont indiqués à titre d'exemple par cercle.
[Fig. 4] représente une photographie d'une nappe de polyuréthane fabriquée selon le procédé de l'invention avec des flocons de granulométrie 25 mm. Quelques flocons sont indiqués à titre d'exemple par cercle.
[Fig. 5] représente une photographie d'une nappe de latex fabriquée selon le procédé de l'invention avec des flocons de granulométrie comprise entre 22 et 28 mm. Quelques flocons sont indiqués à titre d'exemple par cercle.

### EXEMPLES

L'exemple qui suit est donné à titre purement illustratif et ne doit pas être considéré comme limitant l'invention d'une quelconque manière.

### EXEMPLE 1 : Fabrication de nappes de polyuréthane et de latex

### 1. Démantèlement des matelas et sélection (étapes a et b)

Les différents matériaux constituant les vieux matelas sont récupérés, et des fractions séparées sont préparées : le métal, les feutres, les autres matières textiles, les mousse polyuréthane et les mousse en latex.

Ensuite, l'opérateur effectue un premier tri, suivant son bon jugement. Les mousses polyuréthane et latex choisies sont celles qui lui paraissent le moins souillées possibles, mais surtout non humides.

Ensuite, chaque mousse présélectionnée par les opérateurs pour intégrer le circuit de fabrication du matelas Again^{®} est analysée à l'aide du spectromètre à fluorescence x. L'opérateur pointe le pistolet analyseur contre la face d'une mousse et les résultats de l'analyse de la mousse s'affichent sur l'écran de l'appareil dès la fin de la mesure. Si un des éléments ci-après apparait dans la composition d'une mousse, même en très petite quantité (200 ppm), la mousse est écartée du lot de mousses entrant dans la préparation des matelas Again^{®} : brome, étain, antimoine, arsenic, chrome, cobalt, cuivre, mercure, nickel, plomb, sélénium, et fluor. En effet, ces éléments entrent dans la composition de produits chimiques réglementés aujourd'hui.

À cette étape, il se peut que certains produits chimiques organiques réglementés n'aient pas encore été détectés. Un deuxième contrôle qualité relativement à la composition chimique peut ainsi être prévu à une étape ultérieure.

### 2. Hygiénisation (étape optionnelle b2)

Les mousses triées sont hygiénisées, préférentiellement par fumigation.

Pour ce faire, les balles de mousses sont disposées dans une chambre scellée. La chambre est maintenue à une température au moins égale à 15°C, notamment est d'environ 19°C, si besoin à l'aide d'un système de chauffage.

Le gaz fumigène est alors introduit dans la chambre avec contrôle de pression, et les balles sont ainsi maintenues sous atmosphère contrôlée pendant au moins 5 heures. Ensuite, la chambre est ouverte ; après 4 heures un ventilateur professionnel est actionné pendant une heure pour améliorer la ventilation des balles de mousse. Les balles seront encore aérées naturellement dans l'attente de la suite du procédé, ce qui prend deux à dix jours.

Le gaz fumigène utilisé pour l'hygiénisation des mousses est le fluorure de sulfuryl SO₂F₂. C'est un gaz désinfectant efficace contre mites, punaises, cafards, et autres insectes. Lorsqu'il est ingéré par un insecte, le gaz se dissocie en fluorure et en sulfate. Le fluorure interagit avec le métabolisme de l'insecte en entrainant sa mort. En maintenant les insectes et leurs oeufs sous atmosphère de fluorure de sulfuryl, on les prive d'oxygène. De cette autre façon, on contrôle aussi l'hygiénisation des balles de mousse. Le fluorure de sulfuryl est un gaz qui pénètre facilement la matière à désinfecter, mais qui se dissipe aussi très rapidement dès que la matière n'est plus confinée dans le milieu gazeux.

### 3. Préparation des nappes de polyuréthane de l'invention (étape c)

Les mousses de polyuréthane issues de l'étape d'hygiénisation sont broyées pour en faire des flocons granulométrie inférieure à 8 mm. Les flocons sont alors mélangés à un liant isocyanate à base de diisocyanate de diphénylméthylène (MDI). Le mélange qui comprend 6 à 12% en masse de liant est versé dans un moule rectangulaire et il pressé. Le MDI réagit alors avec l'humidité naturellement présente dans les mousses et sous l'effet du catalyseur compris dans le liant pour former un réseau de colle à travers les flocons de mousse. Le démoulage intervient 3 à 5 heures plus tard.

Le gâteau est découpé pour obtenir des nappes d'épaisseur et de longueur souhaitée.

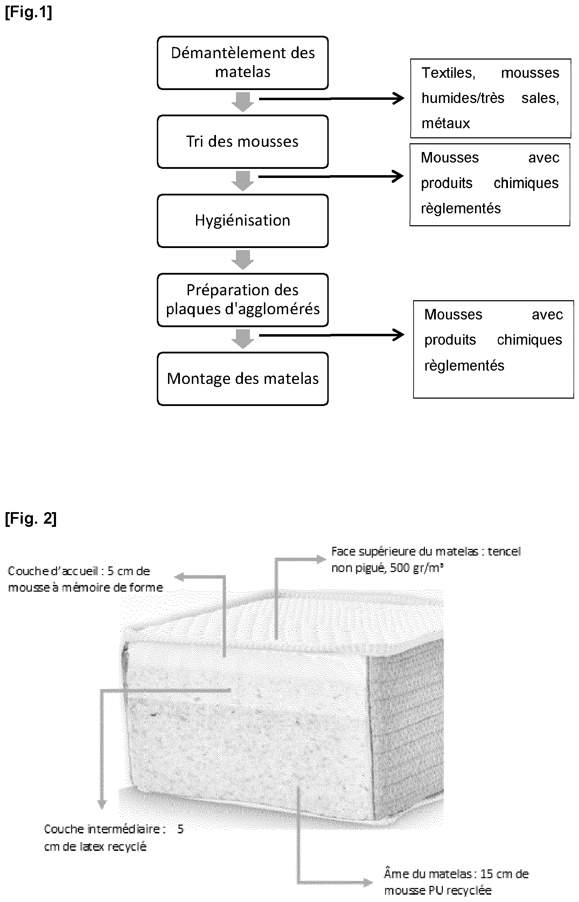

Un exemple de nappe selon l'exemple 1 ; d'épaisseur 15 cm, est montré sur la figure 1.

La densité des plaques de mousses polyuréthane préparées pour la fabrication du matelas est de l'ordre de 68 à 75 kg/m³.

### Exemple 2 : Nappe de polyuréthane avec des flocons de granulométrie > 20 mm

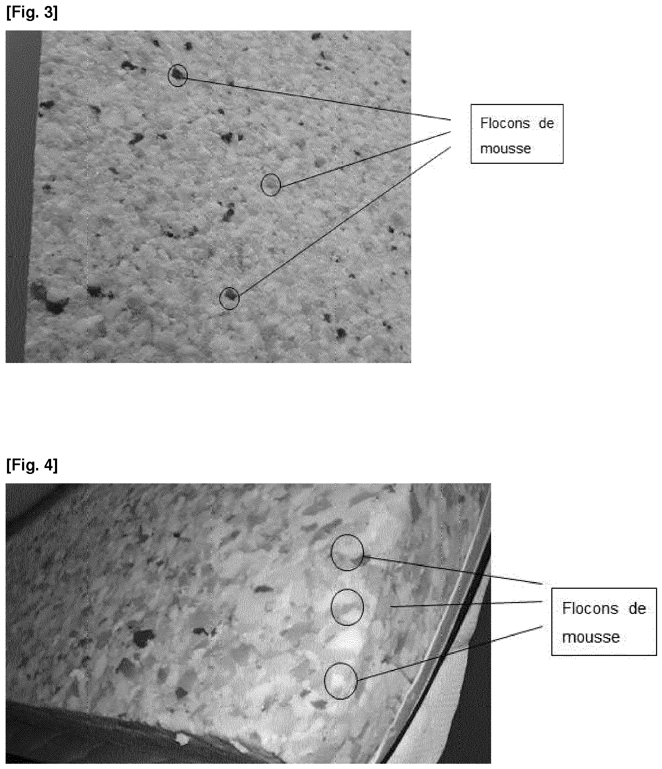

Le procédé de l'exemple 1 est mis en oeuvre, avec la différence que les mousses triées sont broyées de manière à obtenir des flocons de granulométrie de 20 à 25 mm (voir figure 4). Les nappes obtenues ont 15 cm d'épaisseur, et présentent une densité de 40 kg.m⁻³.

Les nappes obtenues se déchirent aisément simplement en les étirant à la main. Tandis que les plaques réalisées selon l'exemple 1, avec des flocons de de granulométrie inférieure à 8 mm, résistent mieux au même test.

### Exemple 3. Préparation des nappes de latex (étape c)

Les nappes de latex sont obtenues selon un procédé similaire au procédé de l'exemple 1.

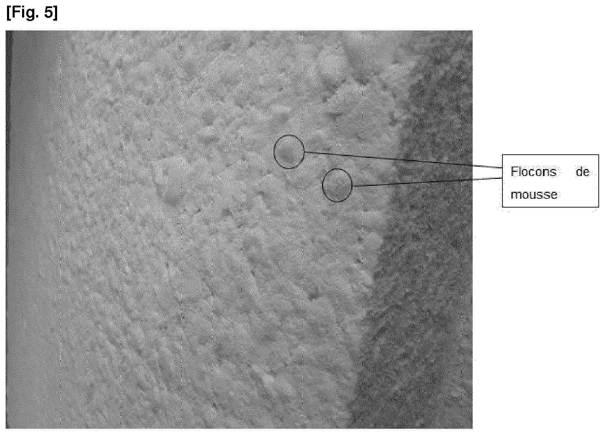

Après l'étape d'hygiénisation, les mousses de latex sont broyées. La granulométrie des flocons dans ce cas est comprise entre 22 mm et 28 mm (voir figure 5). Les nappes d'agglomérées préparées avec ces granulométries résistent aux déchirures à la main aussi bien que les nappes d'aggloméré de polyuréthane préparées avec des flocons de granulométrie inférieure ou égale à 8 mm. La nappe d'aggloméré de latex est préférentiellement préparée avec le MDI pour liant, tout comme l'aggloméré de polyuréthane. Mais il peut tout aussi bien être préparé avec du TDI.

La densité des plaques de latex ainsi obtenues est comprise entre 110 et 125 kg/m³. L'épaisseur de ces nappes est de l'ordre de 4 à 6 cm.

### EXEMPLE 4 : Fabrication de matelas

La nappe de polyuréthane est collée à la nappe de latex, puis la couche d'accueil en mousse de mémoire de forme est collée à la couche de latex. Le matelas tri-couche est alors habillé de son coutil en tencel pour la face de couchage et les côtés et en tissus antidérapant pour le dessous du matelas.

La mousse viscoélastique qui fait office de couche d'accueil est une couche vierge, elle est donc certifiée conforme à la règlementation en vigueur. C'est une mousse polyuréthane à mémoire de forme de densité comprise entre 48 kg/m³ et 52 kg/m³ de 4 à 7 cm d'épaisseur. La colle utilisée est une colle thermofusible à base de polyuréthane, de marque Intadmet MTH-10 commercialisée par la société Intad. La colle n'est déposée que sur une bande de 10 à 20 cm sur le bord de l'une des surfaces à coller.

### Contrôle qualité (étape optionnelle)

De préférence, pour chaque batch de 200 matelas ou moins à produire, un échantillon d'aggloméré de latex et un échantillon d'aggloméré de polyuréthane sont prélevés. Ces échantillons sont analysés par un laboratoire externe. À cet effet, plusieurs méthodes d'analyse sont utilisées :
ICP - AES; spectrométrie de masse à plasma induit.
GC - MS ; chromatographie en phase gazeuse suivie de la spectrométrie de masse.
CI - GC - MS; ionisation chimique suivie de la chromatographie en phase gazeuse et de la spectrométrie de masse.
LC-MS-MS ; chromatographie en phase liquide combinée avec la spectrométrie de masse en tandem de quadripôles.
LC-DAD-MS ; chromatographie en phase liquide combinée avec détection à barrette de diodes et spectrométrie de masse.

Les analyses sont réalisées soit suivant des méthodes internes aux laboratoires sollicités, soit suivant les normes européennes en vigueur lorsqu'il en existe. C'est le cas par exemple pour l'analyse des organoétains et des retardateurs de flamme bromés qui se font suivant les normes ISO 17353 : 2004 et IEC 62321, ou pour l'analyse du diméthylfuramate suivant la norme ISO16186 : 2012.

Dans le cadre de ces analyses chimiques, l'on recherche toutes les substances organiques susceptibles d'être présentes dans des mousses de matelas usagées et qui sont reprises dans l'Annexe XVII du règlement REACH N°1907/2006/CE du 18/12/2006, ou dans la réglementation POP N° 850/2004/CE du 29/04/2004 ou dans le Règlement CLP N° 1272/2008/CE du 16/12/2008.

Si une substance SVHC (substance of very high concern) est détectée au-delà de 0,1% et/ou de la limite de concentration spécifique établie dans le Règlement CLP (CE) N° 1272/2008, et ses amendements, le lot d'agglomérés duquel l'échantillon analysé provient est éliminé par incinération. Il n'est de préférence pas utilisé pour le montage des matelas de l'invention. Les résultats des analyses chimiques pour chaque batch conditionnent donc la suite de la chaine de production. Lorsque les analyses chimiques sont toutes bonnes, c'est-à-dire qu'aucune SVHC ne se retrouve dans l'aggloméré d polyuréthane ou de latex, les matelas eux-mêmes peuvent alors être produits.

Cette étape de contrôle qualité permet de ne pas mettre sur le marché des substances interdites par la règlementation européenne qui auraient pu ne pas être détectés lors des premiers contrôles qualité.

### Caractéristiques chimiques

Dans les analyses XRF ainsi que celles du contrôle qualité, aucune substance chimique réglementée au-delà des seuils fixés par la législation n'est détectée. Les résultats de l'analyse d'un matelas ont relevé des traces de dibutylétain-DBT (0,16 ppm) et un phtalate, le DEHP (16,5 ppm) dans la mousse agglomérée de polyuréthane, et du disulfure de carbone (2,71 ppm) a été détecté dans la mousse agglomérée de latex, mais ces valeurs sont largement en-dessous des règlementations en vigueur et des seuils fixés par l'écolabel européen pour les matelas de lit, soit 1000 ppm.

Table 1: Fiche technique du matelas Again^{®}

**[Table 1]**

| | |
|---|---|
| **Dimensions** | Le matelas existe dans les dimensions standards : 80 × 190 ; 90 × 190 ; 140 × 190 ; 80 × 200 ; 90 × 200 ; 140 × 200 ; 150 × 200 ; 180 × 200. L'épaisseur du matelas Again est de 25 cm. Le poids du matelas varie de 29 kg (80 × 190) à 69 kg (180 × 200). |
| **Le coutil** | Tous les textiles répondent au standard 100 OEKOTEX. |
| **La couche d'accueil** | Mousse à mémoire de forme conforme au standard 100 OEKOTEX. |
| **La couche intermédiaire** | Cette couche en latex a pour rôle d'apporter au matelas de l'élasticité, Avec un confort mi- ferme à ferme. |
| **L'âme du matelas** | En polyuréthane de haute densité, elle assure le soutient du dormeur et prévient tout effet talon, aussi bien qu'un matelas à ressorts ensachés. |
| **Sommier et utilisation** | Toute surface plane peut être employée comme support pour le matelas. Le matelas ne comporte de préférence qu'une seule face de couchage. |

### Caractéristiques mécaniques

Des essais de fatigue statique ont été effectués sur le matelas de l'exemple 4, selon la norme NF EN 1957. La perte d'épaisseur sur le plan de couchage était de l'ordre de 6 mm, et la perte d'épaisseur sur les bords du matelas était de 0,1 mm (valeur cible < 18mm, selon la norme CTB literie pour les produits de haute gamme, définie par l'institut Technologique FCBA en France).

À l'issue des tests au rouleau, le matelas de l'exemple 4 a légèrement gagné en dureté de 3,4% et perdu en fermeté de +2,3% pour le plan de couchage, alors que les indices de fermeté n'ont pas variés aux bords du matelas. Les variations enregistrées restent bien en deçà de la limite maximale fixée pour des produits haut de gamme (18%).

Des essais sur la mousse d'accueil, suivant la norme EN ISO 1856 méthode C, avec humidité ont été effectués, pour déterminer la rémanence à la compression de cette mousse. La valeur médiane de la rémanence à la compression obtenue était de 8,2%. Elle est inférieure à la valeur seuil de 12% fixée pour les produits de haute gamme. La valeur de rémanence après 24h de repos était de 4,4%, ce qui traduit le fait que la mousse reprend rapidement sa forme initiale. Ainsi, les matelas produits selon l'exemple 2 sont en conformité avec les normes européennes.

### Résultats

Le matelas de l'exemple 4 a les caractéristiques mécaniques d'un matelas de haute gamme, mais surtout, ne contient aucune substance réglementée dans des concentrations non autorisées.

Le matelas de l'exemple 4, fabriqué à partir des mousses polyuréthane et latex recyclées de matelas usagé, est constitué de trois couches de mousses superposées qui lui offrent simultanément un grand confort, de l'élasticité et un soutien ferme (voir Figure 2).

### EXEMPLE 5 : Exemple comparatif

Un autre matelas comportant trois couches a été fabriqué et testé. Les couches de ce matelas étaient les suivantes :
- Une couche de 15 cm d'aggloméré de mousse polyuréthane de l'exemple 1, de 15 cm d'épaisseur, la même que celle utilisée pour le matelas de l'exemple 4,
- Une couche intermédiaire de 5 cm de mousse hybride vierge de densité 35 kg/m³. Cette mousse en polyuréthane comportait des billes hygroscopiques,
- Une couche d'accueil de 5 cm de mousse viscoélastique de densité 50 kg/m³, la même que celle qui est utilisée pour le matelas de l'exemple 4.

Les propriétés mécaniques de ce matelas ne se sont pas avérées aussi bonnes que celles du matelas de l'exemple 4, bien qu'intégrant deux couches vierges. Les essais de détermination de la rémanence à la compression selon la norme NF EN ISO 1856 Méthode C (avec humidité) ont révélé une valeur médiane de rémanence à la compression de plus de 70%. La couche de mousse hybride intermédiaire s'effondre donc complètement. Ces essais démontrent que la couche intermédiaire en aggloméré de latex du matelas de l'exemple 4 apporte de l'élasticité au matelas et participe à sa longue durée de vie.

## Revendications

1. Procédé de fabrication d'une nappe de polyuréthane à partir de matelas recyclés, ladite nappe étant constituée de flocons de mousse de polyuréthanne, de liant, et éventuellement d'additifs, lesdits flocons étant constitués à au moins 98% en poids par rapport au poids total des flocons d'une mousse de polyuréthane, ledit procédé comprenant les étapes successives suivantes :
a) une étape de démantèlement de matelas usagés, permettant de fournir des matériaux de base séparés, les matériaux de base comprenant notamment des mousses de polyuréthane et des mousses de latex,
b) une étape de sélection des mousses de polyuréthane non contaminées présentant une teneur en composés halogénés et/ou comprenant des métaux lourds inférieure ou égale à 0,1%,
c) une étape de broyage desdites mousses obtenues à l'étape b), pour obtenir des flocons de mousse polyuréthane non contaminée présentant une granulométrie moyenne inférieure ou égale à 20 mm,
d) une étape de formation d'une nappe de polyuréthane, comprenant le mélange des flocons de mousse polyuréthane de l'étape c) avec un liant, et éventuellement des additifs,

2. Procédé selon la revendication 1, **caractérisé en ce que** les flocons de l'étape c) présentent une granulométrie comprise entre 5 mm et 20 mm, par exemple entre 6 mm et 15 mm.

3. Procédé selon l'une quelconque des revendications 1 ou 2, **caractérisé en ce que** la densité des nappes est comprise entre 60 kg/m3 et 80 kg/m³, notamment entre 68 et 75 kg/m³.

4. Procédé selon l'une quelconque des revendications 1 à 3, **caractérisé en ce que** l'épaisseur des nappes est comprise entre 5 et 20 cm, notamment de 8 à 18 cm.

5. Procédé de fabrication d'une nappe de latex a partir de matelas recyclés, ladite nappe étant constituée de flocons de mousse de latex, de liant, et éventuellement d'additifs, lesdits flocons étant constitués à au moins 98% en poids par rapport au poids total des flocons d'une mousse de latex, ledit procédé comprenant les étapes successives suivantes :
a) Une étape de démantèlement de matelas usagés, permettant de fournir des matériaux de base séparés, les matériaux de base comprenant notamment les mousses de polyuréthanes et les mousses de latex,
b) Une étape de sélection des mousses de latex non contaminées, présentant une teneur en composés halogénés et/ou comprenant des métaux lourds inférieure ou égale à 0,1%,
c) Une étape de broyage des mousses de latex obtenues à l'étape b), pour obtenir des flocons de mousse de latex présentant une granulométrie moyenne inférieure ou égale à 35 mm,
d) Une étape de formation d'une nappe de latex, comprenant le mélange des flocons de mousse de latex de l'étape c) avec un liant, et éventuellement un additif,

6. Procédé selon la revendication 5, **caractérisé en ce que** les flocons de l'étape c) présentent une granulométrie comprise entre 20 mm et 30 mm, par exemple entre 22 mm et 28 mm.

7. Procédé selon l'une quelconque des revendications 5 ou 6, **caractérisé en ce que** la densité des nappes est comprise entre 100 et 150 kg/m³, de préférence entre 110 et 125 kg/m³.

8. Procédé selon l'une quelconque des revendications 5 à 7, **caractérisé en ce que** l'épaisseur des nappes est comprise entre 3 et 10 cm, par exemple entre 3 et 6 cm.

9. Procédé selon l'une quelconque des revendications 1 à 8, **caractérisé en ce qu'**à l'étape b), les mousses polyuréthane issues de l'étape a) selon les revendication 1 à 4 ou les mousse latex issues de l'étape (a) selon les revendications 5 à 8 sont analysées par spectrophotométrie à fluorescence X, spectrométrie par absorption atomique, les techniques analytiques par plasma induit (ICP), et la mousse est écartée lorsque la quantité mesurée des métaux lourds est supérieure à 0,1 %.

10. Procédé selon l'une quelconque des revendications 1 à 9, **caractérisé en ce qu'**on effectue entre les étapes b) et c), une étape b2) d'hygiénisation, typiquement effectuée par fumigation, notamment par mise en contact des mousses avec un gaz fumigène, de préférence le fluorure de sulfuryl SO₂F₂.

11. Procédé selon la revendication 10, **caractérisé en ce que** l'étape d'hygiénisation est effectuée par fumigation, et comprend une étape d'aération suivant l'étape de fumigation.

12. Procédé selon l'une quelconque des revendications 1 à 11, **caractérisé en ce que** le liant utilisé à l'étape d) est un isocyanate, notamment choisi parmi le diisocyanate de diphénylméthylène (MDI) ou le diisocyanate de toluène (TDI ou tolylène-2,4-diisocyanate), de préférence le MDI.

13. Procédé selon l'une quelconque des revendications 1 à 12, **caractérisé en ce que** le mélange de liant et de flocons de l'étape d) comprend de 5% à 20%, de préférence de 6% à 15%, notamment de 6% à 12% en masse de liant par rapport au poids total du mélange.

14. Procédé selon l'une quelconque des revendications 1 à 13 **caractérisé en ce que** le mélange obtenu à l'étape d) est versé dans un moule puis subit une compression.

15. Procédé de fabrication d'un matelas, comprenant :
- le procédé de fabrication d'une nappe de polyuréthane à partir de matelas recyclés selon l'une quelconque des revendications 1 à 4 et 10 à 14,
- le procédé de fabrication d'une nappe de latex à partir de matelas recyclés selon l'une quelconque des revendications 5 à 14,
- l'assemblage d'une nappe de polyuréthane obtenue dans l'étape précédente, d'une nappe de latex obtenue dans l'étape précédene, et d'une couche d'accueil, avantageusement dans cet ordre.

16. Procédé selon la revendication 15, **caractérisé en ce que** l'assemblage est effectué par collage des nappes entre elles.

17. Procédé selon la revendication 16, **caractérisé en ce que** le collage est effectué à l'aide d'une colle thermofusible à base de polyuréthane.

18. Procédé selon la revendication 17 , **caractérisé en ce que** la colle est déposée sur une bande de 10 à 20 cm sur le bord de l'une des surfaces à coller.

19. Procédé selon l'une quelconque des revendications17 ou 18, **caractérisé en ce que** le matelas est habillé d'un coutil.

## Patentansprüche

1. Verfahren zur Herstellung einer Polyurethanbahn aus recycelten Matratzen, wobei die Bahn aus Polyurethanschaumflocken, Bindemittel und gegebenenfalls Zusatzstoffen besteht, wobei die Flocken zu mindestens 98 Gewichtsprozent, bezogen auf das Gesamtgewicht der Flocken, aus einem Polyurethanschaum bestehen, wobei das Verfahren die folgenden aufeinanderfolgenden Schritte umfasst:
a) einen Schritt des Zerlegens von gebrauchten Matratzen, wodurch separate Grundmaterialien bereitgestellt werden können, wobei die Grundmaterialien insbesondere Polyurethanschaum und Latexschaum umfassen,
b) einen Schritt des Auswählens von nicht kontaminierten Polyurethanschaumstoffen, die einen Gehalt an halogenierten Verbindungen und/oder Schwermetallen von 0,1 % oder weniger aufweisen,
c) einen Schritt des Zerkleinerns der in Schritt b) erhaltenen Schäume, um nicht kontaminierte Polyurethanschaumflocken mit einer mittleren Korngröße von 20 mm oder weniger zu erhalten,
d) einen Schritt zur Bildung einer Polyurethanbahn, der das Mischen der Polyurethanschaumflocken aus Schritt c) mit einem Bindemittel und gegebenenfalls Zusatzstoffen umfasst.

2. Verfahren nach Anspruch 1, **dadurch gekennzeichnet, dass** die Flocken aus Schritt c) eine Korngröße zwischen 5 mm und 20 mm, z. B. zwischen 6 mm und 15 mm, aufweisen.

3. Verfahren nach einem der Ansprüche 1 oder 2, **dadurch gekennzeichnet, dass** die Dichte der Bahnen zwischen 60 kg/m³ und 80 kg/m³, insbesondere zwischen 68 und 75 kg/m³, liegt.

4. Verfahren nach einem der Ansprüche 1 bis 3, **dadurch gekennzeichnet, dass** die Dicke der Bahnen zwischen 5 und 20 cm, insbesondere 8 bis 18 cm, beträgt.

5. Verfahren zur Herstellung einer Latexbahnbahn aus recycelten Matratzen, wobei die Bahn aus Latexschaumflocken, Bindemittel und gegebenenfalls Zusatzstoffen besteht, wobei die Flocken zu mindestens 98 Gewichtsprozent, bezogen auf das Gesamtgewicht der Flocken, aus einem Latexschaum bestehen, wobei das Verfahren die folgenden aufeinanderfolgenden Schritte umfasst:
a) einen Schritt des Zerlegens von gebrauchten Matratzen, wodurch getrennte Ausgangsmaterialien bereitgestellt werden können, wobei die Ausgangsmaterialien insbesondere Polyurethanschäume umfassen und Latexschaumstoffe,
b) einen Schritt zum Auswählen von nicht kontaminierten Latexschäumen, die einen Gehalt an halogenierten Verbindungen und/oder Schwermetallen von 0,1 % oder weniger aufweisen,
c) einen Schritt des Zerkleinerns der in Schritt b) erhaltenen Latexschäume, um Latexschaumflocken mit einer mittleren Teilchengröße von 35 mm oder weniger zu erhalten,
d) einen Schritt zur Bildung einer Latexbahn, der das Mischen der Latexschaumflocken aus Schritt c) mit einem Bindemittel und gegebenenfalls einem Zusatzstoff umfasst.

6. Verfahren nach Anspruch 5, **dadurch gekennzeichnet, dass** die Flocken aus Schritt c) eine Korngröße zwischen 20 mm und 30 mm, z. B. zwischen 22 mm und 28 mm, aufweisen.

7. Verfahren nach einem der Ansprüche 5 oder 6, **dadurch gekennzeichnet, dass** die Dichte der Bahnen zwischen 100 und 150 kg/m³, vorzugsweise zwischen 110 und 125 kg/m³, liegt.

8. Verfahren nach einem der Ansprüche 5 bis 7, **dadurch gekennzeichnet, dass** die Dicke der Bahnen zwischen 3 und 10 cm, z. B. zwischen 3 und 6 cm, beträgt.

9. Verfahren nach einem der Ansprüche 1 bis 8, **dadurch gekennzeichnet, dass** in Schritt b) der Polyurethanschaum aus Schritt a) nach den Ansprüchen 1 bis 4 oder der Latexschaum aus Schritt a) nach den Ansprüchen 5 bis 8 durch Röntgenfluoreszenz-Spektrophotometrie, Atomabsorptionsspektrometrie, Induced Plasma Analytical Techniques (ICP) analysiert wird, und der Schaum wird verworfen, wenn die gemessene Menge an Schwermetallen mehr als 0,1 % beträgt.

10. Verfahren nach einem der Ansprüche 1 bis 9, **dadurch gekennzeichnet, dass** zwischen den Schritten b) und c) ein Hygienisierungsschritt b2) durchgeführt wird, der typischerweise durch Begasung erfolgt, insbesondere durch Inkontaktbringen der Schaumstoffe mit einem Rauchgas, vorzugsweise dem Fluorid Sulfuryl SO₂F₂.

11. Verfahren nach Anspruch 10, **dadurch gekennzeichnet, dass** der Hygienisierungsschritt durch Begasung durchgeführt wird und einen Schritt der Belüftung umfasst, der auf den Schritt der Begasung folgt.

12. Verfahren nach einem der Ansprüche 1 bis 11, **dadurch gekennzeichnet, dass** das in Schritt d) verwendete Bindemittel ein Isocyanat ist, insbesondere ausgewählt aus Diphenylmethylendiisocyanat (MDI) oder Toluoldiisocyanat (TDI oder toIyIene-2,4-diisocyanate), vorzugsweise MDI.

13. Verfahren nach einem der Ansprüche 1 bis 12, **dadurch gekennzeichnet, dass** die Mischung aus Bindemittel und Flocken in Schritt d) 5 bis 20 Gewichtsprozent, vorzugsweise 6 bis 15 Gewichtsprozent, insbesondere 6 bis 12 Gewichtsprozent, Bindemittel, bezogen auf das Gesamtgewicht der Mischung, enthält.

14. Verfahren nach einem der Ansprüche 1 bis 13, **dadurch gekennzeichnet, dass** die in Schritt d) erhaltene Mischung in eine Form gegossen und dann gepresst wird.

15. Verfahren zur Herstellung einer Matratze, umfassend:
- Verfahren zur Herstellung einer Polyurethanbahn aus recycelten Matratzen gemäß einem der Ansprüche 1 bis 4 und 10 bis 14,
- Verfahren zur Herstellung einer Latexbahn aus recycelten Matratzen nach einem der Ansprüche 5 bis 14,
- Zusammenfügen einer Polyurethanbahn, die im vorherigen Schritt erhalten wurde, einer Latexbahn, die im vorherigen Schritt erhalten wurde, und einer Trägerschicht, vorzugsweise in dieser Reihenfolge.

16. Verfahren nach Anspruch 15, **dadurch gekennzeichnet, dass** das Zusammenfügen durch Verkleben der Vliese miteinander erfolgt.

17. Verfahren nach Anspruch 16, **dadurch gekennzeichnet, dass** das Verkleben mit einem Heißschmelzkleber auf Polyurethanbasis erfolgt.

18. Verfahren nach Anspruch 17, **dadurch gekennzeichnet, dass** der Klebstoff in einem Streifen von 10 bis 20 cm auf den Rand einer der zu verklebenden Flächen aufgebracht wird.

19. Verfahren nach einem der Ansprüche 17 oder 18, **dadurch gekennzeichnet, dass** die Matratze mit einem Bezug versehen wird.

## Claims

1. Method for manufacturing a layer of polyurethane from recycled mattresses, said layer consisting of flakes of polyurethane foam, binder, and optionally additives, said flakes consisting of at least 98% by weight relative to the total weight of the flakes of a polyurethane foam, said method comprising the following successive steps:
a) a step of dismantling used mattresses, allowing to provide separated base materials, the base materials comprising in particular polyurethane foams and latex foams,
b) a step of selecting non-contaminated polyurethane foams having a concentration of compounds that are halogenated and/or comprise heavy metals less than or equal to 0.1%;
c) a step of grinding said foams obtained in step b), to obtain flakes of non-contaminated polyurethane foam having an average particle size less than or equal to 20mm,
d) a step of forming a layer of polyurethane, comprising the mixture of the flakes of polyurethane foam from step c) with a binder, and optionally additives.

2. Method according to claim 1, **characterised in that** the flakes of step c) have a particle size between 5mm and 20mm, for example between 6mm and 15mm.

3. Method according to any one of claims 1 or 2, **characterised in that** the density of the layers is between 60kg/m³ and 80kg/m3, in particular between 68 and 75kg/m³.

4. Method according to any one of claims 1 to 3, **characterised in that** the thickness of the layers is between 5 and 20cm, in particular from 8 to 18cm.

5. Method for manufacturing a layer of latex from recycled mattresses, said layer consisting of flakes of latex foam, binder, and optionally additives, said flakes consisting of at least 98% by weight relative to the total weight of the flakes of a latex foam, said method comprising the following successive steps:
a) A step of dismantling used mattresses, allowing to provide separated base materials, the base materials comprising in particular the polyurethane foams and the latex foams,
b) A step of selecting non-contaminated latex foams having a concentration of compounds that are halogenated and/or comprise heavy metals less than or equal to 0.1%;
c) A step of grinding the latex foams obtained in step b) , to obtain flakes of latex foam having an average particle size less than or equal to 35mm,
d) A step of forming a layer of latex, comprising the mixture of the flakes of latex foam from step c) with a binder, and optionally an additive.

6. Method according to claim 5, **characterised in that** the flakes of step c) have a particle size between 20mm and 30mm, for example between 22mm and 28mm.

7. Method according to any one of claims 5 or 6, **characterised in that** the density of the layers is between 100 and 150kg/m3, in particular between 110 and 125kg/m³.

8. Method according to any one of claims 5 to 7, **characterised in that** the thickness of the layers is between 3 and 10cm, for example between 3 and 6cm.

9. Method according to any one of claims 1 to 8, **characterised in that** in step b), the polyurethane foams coming from step a) according to claims 1 to 4 or the latex foams coming from step a) according to claims 5 to 8 are analysed by X-ray fluorescence spectrophotometry, atomic absorption spectroscopy, the induction plasma (ICP) analytic techniques, and the foam is removed when the measured quantity of the heavy metals is greater than 0.1%.

10. Method according to any one of claims 1 to 9, **characterised in that** between steps b) and c), a step b2) of hygienisation, typically carried out by fumigation, in particular by placing the foams in contact with a smoke-producing gas, preferably SO₂F₂ sulfuryl fluoride, is carried out.

11. Method according to claim 10, **characterised in that** the step of hygienisation is carried out by fumigation, and comprises a step of aeration following the step of fumigation.

12. Method according to any one of claims 1 to 11, **characterised in that** the binder used in step d) is an isocyanate, in particular chosen from methylene diphenyl diisocyanate (MDI) or toluene diisocyanate (TDI or tolylene-2,4-diisocyanate), preferably MDI.

13. Method according to any one of claims 1 to 12, **characterised in that** the mixture of binder and of flakes of step d) comprises 5% to 20%, preferably 6% to 15%, in particular 6% to 12% by weight of binder relative to the total weight of the mixture.

14. Method according to any one of claims 1 to 13, **characterised in that** the mixture obtained in step d) is poured into a mould then undergoes a compression.

15. Method for manufacturing a mattress, comprising:
- the method for manufacturing a layer of polyurethane from recycled mattresses according to any one of claims 1 to 4 and 10 to 14,
- the method for manufacturing a layer of latex from recycled mattresses according to any one of claims 5 to 14,
- the assembly of a layer of polyurethane obtained in the preceding step, of a layer of latex obtained in the preceding step, and of a comfort layer, advantageously in that order.

16. Method according to claim 15, **characterised in that** the assembly is carried out by gluing of the layers to each other.

17. Method according to claim 16, **characterised in that** the gluing is carried out using a hot-melt adhesive containing polyurethane.

18. Method according to claim 17, **characterised in that** the glue is deposited on a band of 10 to 20cm on the edge of one of the surfaces to be glued.

19. Method according to any one of claims 17 or 18, **characterised in that** the mattress is lined with ticking.
